# EUROPEAN PATENT APPLICATION

(11) **EP 4 660 581 A1**
(43) Date of publication of application: **10.12.2025**
(21) Application number: 24180588.6
(22) Date of filing: 06.06.2024
(51) Int. Cl.: G01C 21/00

(54) **METHOD, APPARATUS AND COMPUTER PROGRAM TO MANAGE MAP DATA**

(71) Applicant: TomTom Navigation B.V., 1011 AC Amsterdam (NL)
(72) Inventor: Buve, Rijn Willem, 1011 AC Amsterdam (NL)
(74) Representative: Swindell & Pearson Limited

(57) **Abstract**

Certain examples of the present disclosure relate to management of map data.

Certain examples provide a computer-implemented method (100) of managing one or more portions (400) of map data stored on a data storage device (13) of an apparatus (10), wherein the one or more portions of map data provide map data for respective one or more areas (300) of a digital map (200), the method comprising: determining (101) whether a first portion of map data (400_1) for a first area (300_1) of the digital map is consistent with a second portion of map data (400_2), stored in the data storage device, for a second area (300_2) adjacent the first area; and triggering (102), based at least in part on the determination, an update or a removal of the second portion of map data.

## Description

### TECHNOLOGICAL FIELD

Examples of the disclosure relate to manging map data, in particular a method, an apparatus, a computer program to manage one or more portions of map data stored on a data storage device of an apparatus. Some examples, though without prejudice to the foregoing, relate to the selective updating or removal of map tiles of a digital map stored on a map cache.

### BACKGROUND

Conventional management of map data (not least for example the management of map tiles of a digital map, such as updating and removing map tiles) is not always optimal.

In some circumstances it can be desirable to improve the management of map data. In some examples it can be desirable to provide an improved method to update and remove map data. In some examples it can be desirable to provide an efficient method to update map data.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided a computer-implemented method of managing one or more portions of map data stored on a data storage device of an apparatus, wherein the one or more portions of map data provide map data for respective one or more areas of a digital map, the method comprising:
determining whether a first portion of map data for a first area of the digital map is consistent with a second portion of map data, stored in the data storage device, for a second area adjacent the first area; and
triggering, based at least in part on the determination, an update or a removal of the second portion of map data.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means configured to perform the above-mentioned method.

According to various, but not necessarily all, examples of the disclosure there is provided an apparatus for managing one or more portions of map data stored on a data storage device of the apparatus, wherein the one or more portions of map data provide map data for respective one or more areas of a digital map, the apparatus comprising:
means for determining whether a first portion of map data for a first area of the digital map is consistent with a second portion of map data, stored in the data storage device, for a second area adjacent the first area; and
means for triggering, based at least in part on the determination, an update or a removal of the second portion of map data.

According to various, but not necessarily all, examples of the disclosure there is provided a computer program for managing one or more portions of map data stored on a data storage device of an apparatus, wherein the one or more portions of map data provide map data for respective one or more areas of a digital map, the computer program comprising instructions, which when executed by the apparatus, cause the apparatus to perform:
determining whether a first portion of map data for a first area of the digital map is consistent with a second portion of map data, stored in the data storage device, for a second area adjacent the first area; and
triggering, based at least in part on the determination, an update or a removal of the second portion of map data.

According to various, but not necessarily all, examples of the disclosure there is provided an apparatus for managing one or more portions of map data stored on a data storage device of the apparatus, wherein the one or more portions of map data provide map data for respective one or more areas of a digital map, the apparatus comprising:
at least one processor; and
at least one memory storing instructions that, when executed by the at least one processor, cause the apparatus at least to:
   determine whether a first portion of map data for a first area of the digital map is consistent with a second portion of map data, stored in the data storage device, for a second area adjacent the first area; and
   trigger, based at least in part on the determination, an update or a removal of the second portion of map data.

According to various, but not necessarily all, examples of the disclosure there is provided a non-transitory computer readable medium encoded with instructions for managing one or more portions of map data stored on a data storage device of an apparatus, wherein the one or more portions of map data provide map data for respective one or more areas of a digital map, and wherein the instructions, when executed by at least one processor, causes at least the following to be performed:
determining whether a first portion of map data for a first area of the digital map is consistent with a second portion of map data, stored in the data storage device, for a second area adjacent the first area; and
triggering, based at least in part on the determination, an update or a removal of the second portion of map data.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, the method further comprises:
determining whether the first portion of map data is consistent with each portion of map data, stored in the data storage device, that represents an area adjacent the first area; and
triggering an update or a removal of each portion of map data determined to be inconsistent with the first portion of map data.

In some but not necessarily all examples, determining whether the first portion of map data is consistent with the second portion of map data comprises at least one of:
determining whether a first part of a map feature, indicated in the first portion of map data as extending from the first area into the second area, is consistent with a second part of the map feature indicated in the second portion of map data;
determining whether first information, from the first portion of map data and which characterises a map feature at a boundary between the first and second areas, is consistent with second information, from the second portion of the map data, that characterises the map feature at the boundary between the first and second areas;
determining whether first information, from the first portion of map data and which is indicative of a number of and/or a position of one or more navigable elements that extend into the second area, is consistent with second information, from the second portion of the map data, that is indicative of the number of and/or the position of the one or more navigable elements that extend into the second area from the first area;
determining whether a version of the first portion of map data and a version of the second portion of the map data are the same or similar or compatible; and
determining whether a duration of validity, associated with the second portion of map data, has expired.

In some but not necessarily all examples, the first portion of map data comprises an indication that a map feature extends from the first area into the second area, and wherein determining whether the first portion of map data is consistent with the second portion of map data comprises at least one of:
determining whether the second portion of map data comprises an indication of the map feature extending from the first area into the second area;
determining whether a first part of the map feature, in the first area, indicated in the first portion of map data is aligned with a second part of the map feature in the second area indicated in the second portion of map data; and
determining whether a first part of the map feature, in the first area, indicated in the first portion of map data is correctly connected to a second part of the map feature, in the second area, indicated in the second portion of map data.

In some but not necessarily all examples, the method further comprises determining whether to update or remove the second portion of map data based at least in part on determining whether the second area is located within a predetermined zone.

In some but not necessarily all examples, the second portion of map data is updated based at least in part on determining that the second area is located within the predetermined zone.

In some but not necessarily all examples, the second portion of map data is removed based at least in part on determining that the second area is located outside of the predetermined zone.

In some but not necessarily all examples, the method further comprises:
receiving the first portion of map data.

In some but not necessarily all examples, the method further comprises:
sending a request to a source of portions of map data; and
wherein the first portion of map data is received from the source of portions of map data responsive at least in part to the request.

In some but not necessarily all examples, the request is at least one or more of:
a request for a portion of map data for the first area;
a request for one or more portions of map data for a region of the digital map that comprises at least the first area;
a request for one or more portions of map data associated with a route along one or more segments of navigable elements of a network of navigable elements represented by the digital map;
a request to receive a portion of map data for the first area and that is not stored on the data storage device;
a request to update a portion of map data, stored on the data storage device, for the first area;
a request to replace a portion of map data, stored on the data storage device, for the first area and
a user triggered request.

In some but not necessarily all examples, the request is sent based at least in part on one or more of:
determining whether the data storage device comprises a portion of map data for the first area;
determining whether a portion of map data, for the first area and which is stored on the data storage device, is current or up to date;
determining whether a duration of validity, associated with a portion of map data for the first area which is stored on the data storage device, has expired;
determining whether a source of portions of map data comprises a portion of map data for the first area that is newer than a portion of map data, stored on the data storage device, for the first area;
determining whether a portion of map data, for the first area and which is stored on the data storage device, is consistent with a portion of map data, stored on the data storage device, that represents an area adjacent the first area; and
a user request.

In some but not necessarily all examples, triggering an update of the second portion of map data comprises sending a request, to a source of portions of map data, for an update of the second portion of map data.

In some but not necessarily all examples, triggering a removal of the second portion of map data comprises deleting the second portion of map data stored on the data storage device.

In some but not necessarily all examples, at least some of the portions of map data comprise at least one or more of the following:
map tiles of a digital map;
one or more data layers;
information for use in route calculation;
information for use in route guidance;
information for use in lane level navigation;
information for use by in-vehicle robots, driving automation or safety systems;
information for use in visualising at least a part of the digital map on a display device;
navigation information;
information representative of one or more segments of navigable elements of a network of navigable elements; and
Navigation Data Standard, NDS, tiles.

In some but not necessarily all examples, the data storage device comprises at least one or more of:
a map cache;
a navigation data cache; and
a map visualization data cache.

According to at least some examples of the disclosure there is provided a computer-implemented method of managing, by a first apparatus, one or more portions of map data stored on a data storage device of a second apparatus, wherein the one or more portions of map data provide map data for respective one or more areas of a digital map, the method comprising:
determining, by the first apparatus, whether a first portion of map data for a first area of the digital map is consistent with a second portion of map data, stored in the data storage device of the second apparatus, for a second area adjacent the first area; and
causing, by the first apparatus, sending, to the second apparatus and based at least in part on the determination, an update of the second portion of map data.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means configured to perform the above-mentioned method.

According to various, but not necessarily all, examples of the disclosure there is provided an apparatus comprising means for performing the above-mentioned method.

According to various, but not necessarily all, examples of the disclosure there is provided a computer program comprising instructions, which when executed by an apparatus, cause the apparatus to perform above-mentioned method.

According to various, but not necessarily all, examples of the disclosure there is provided an apparatus comprising:
at least one processor; and
at least one memory storing instructions that, when executed by the at least one processor, cause the apparatus at least to perform above-mentioned method.

According to various, but not necessarily all, examples of the disclosure there is provided a non-transitory computer readable medium encoded with instructions that, when executed by at least one processor, causes at least the above-mentioned method to be performed.

In some but not necessarily all examples:
the first apparatus is a server; and
the second apparatus is at least one or more of:
   a client device;
   a mobile navigation apparatus;
   a PND;
   an in-vehicle navigation system;
   a driving automation system or
   a safety system.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
FIG. 1 schematically illustrates an example of a method in accordance with an example of the subject matter described herein;
FIG. 2 schematically illustrates an apparatus in accordance with an example of the subject matter described herein;
FIG. 3 schematically illustrates a computer program in accordance with an example of the subject matter described herein;
FIG. 4 schematically illustrates an example of a set of portions of map data for a set of areas of a digital map;
FIG. 5 schematically illustrates an example of a set of updated portions of map data for the set of areas of the digital map;
FIG. 6 schematically illustrates an example of the set of portions of map data for a set of areas of a digital map of FIG. 4 along with an updated portion of map data for one or the areas;
FIGs. 7, 8 and 9 schematically illustrate determining consistency between portions of map data and the updated portion of map data of FIG. 6;
FIG. 10 schematically illustrates a route through portions of map data of a digital map; and
FIGs. 11, 12 and 13 schematically illustrate examples of timelines for a freshness interval.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the description and drawings, a reference number without a subscript (e.g. 123) can be used as a generic reference to a feature or class/set of features. A reference number with a subscript (e.g. 123_1) can be used as a specific reference, e.g. to differentiate different instances of a feature or class/set of features. A numerical type subscript index (e.g. 123_1) can be used to indicate a specific instance of a class/a member of a set; and a nonspecific instance of the class (member of the set) can be referenced using the reference number with a variable type subscript index (e.g. 123_i).

### DETAILED DESCRIPTION

As used herein, a "map" can be used to denote a digital map, also known as an electronic map.

The digital map may comprise map data representative of longitudinal portions (i.e. segments) of navigable elements of a network of navigable elements in a geographical region. In the digital map, each segment may be defined, at least in part, by an edge (or link) between two nodes. The position of the two nodes can be used to determine an orientation of the edge/segment. The edges/segments may be "directed", in that a direction of travel along the portion of the navigable element represented by the edge/segment may be indicated.

In the following discussion of examples of the disclosure, the navigable elements will be referred simply as roads, and the network of navigable elements is a road network. However, it is to be appreciated that in other examples, a navigable element could be a: foot path, hiking trail, cycle path, canal, tow path, river, railway line, or the like.

The digital map may define/represent a road network via a graph comprising links and nodes (logical connection of links). The links correspond to the roads, often discretized in "(road) portions/segments" or, to emphasize a directionality of the road "directed links/segments". Each road portion/link/segment may also have meta-data, such: a road name, speed limit, number of lanes etc. The digital map may store such meta-data and may also comprise information indicative of a center line that defines a geometry of the road. The center line may be a polyline (that describes an orientation, shape and or curvature of the link) that defines a "middle of the road". The digital map may also comprise additional information not least such as points of interest.

The digital map may comprise a plurality of portions of map data. Such portions of map data may be considered to corresponds to map tiles of a digital map. In this regard, a digital map (e.g. map data thereof) may be divided (or grouped) by tiles of different shapes and sizes, depending on needs. Updates of the digital map may be tile-based. Navigation Data Standard, NDS, tiles, such as NDS.Live tiles, allow for tile-based update of digital maps.

The digital map may comprise, or be divided into, tiles of navigation data for use in routing and navigation guidance (not least for example NDS tiles such as NDS.Live tiles), wherein such navigation data may be stored in a navigation data cache. Alternatively, or in addition, the digital map may comprise map visualization data for use in visualizing at least a part of the digital map on a display device (not least for example Mapbox^{®} tiles), wherein such map visualization data may be stored in a map visualization data cache.

The portions of map data may comprise:
one or more data layers (not least for example a navigation data layer and/or a map visualization data);
information for use in route calculation;
information for use in route guidance;
information for use in lane level navigation;
information for use by in-vehicle robots, driving automation or safety systems;
navigation information; and
information representative of one or more segments of navigable elements of a network of navigable elements.

Digital maps may be used for navigation, route calculation and/or route guidance, not least by navigation devices (for instance in-car or in-dash vehicle navigation systems and Portable Navigation Devices, PNDs, not least such a smart phones) which are computing devices that include GNSS signal reception and processing functionality for positioning/determining a location of the device. In this regard, such devices may have the capability to determine one or more: "fixes", "raw" GNSS fixes or "enhanced" fixes - each fix being a time-stamped geo-position. Such navigation devices, in-dash devices and PNDs are well known and are widely employed as in-car or other vehicle navigation systems.

A digital map, or portions of it, may be stored in a map cache of an apparatus, not least such as a map cache of a PND.

Before describing example embodiments in detail, the problem underlying the present application is described in some more detail.

When updating a digital map, it would be advantageous to enable selective updating of a subset of tiles (e.g. updating individual one or more tiles of the digital map) rather than updating the entire set of tiles (e.g. updating all tiles of the digital map). By enabling tiles of a digital map to be individually updated, this can lead to reduced data consumption requirements and use of telecommunication resources in transmitting/receiving map data updates. For instance, if a route were planned from an origin A to a destination B, one could update, in the cached map, only those tiles through which the route passes instead of updating all tiles in the cached map.

However, an issue with individually updatable tiles is version control and whether an updated tile is still consistent with old/non-updated neighboring/adjacent tiles. Two adjacent tiles may be deemed to be consistent is all links located on adjacent edges of the tiles are present in both tiles. This means that segments that cross tilt boundaries continue on either side of the tile edge, or end exactly on the edge, in both tiles.

If a digital map has neighboring/adjacent tiles that are not consistent with one another, it may not be possible to determine a route or navigate along a route or provide guidance along a route that cross between non-consistent neighboring/adjacent tiles.

Various examples of the disclosure seek to enable map tiles of a digital map to be individually updatable in a manner that ensures consistency of an updated tile with its neighboring/adjacent tiles.

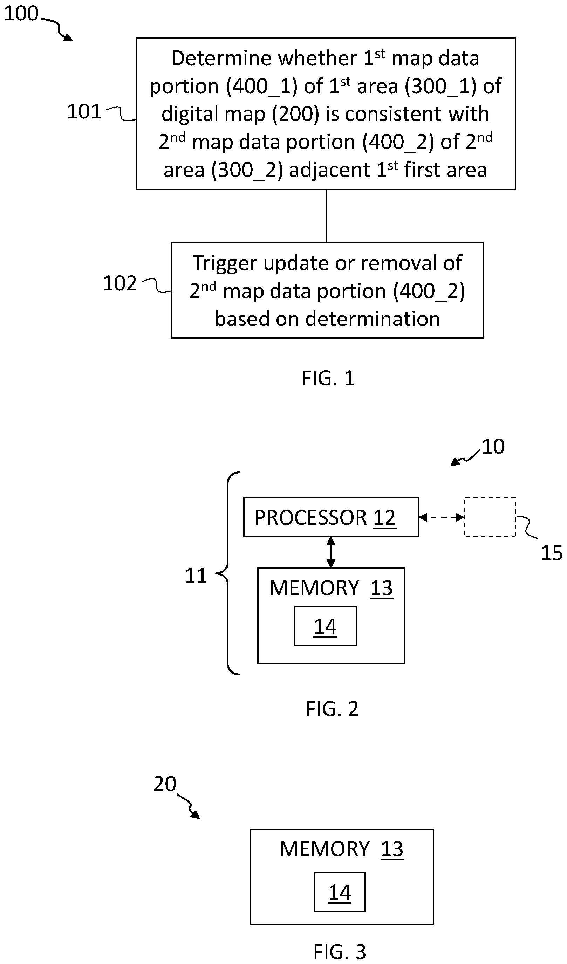

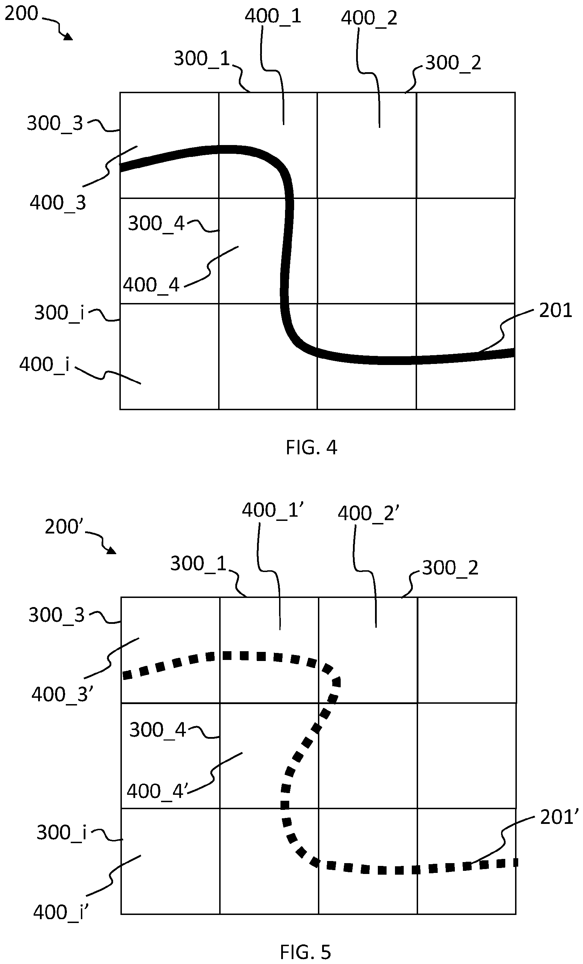

FIG. 1 schematically illustrates an example of a method 100. During discussion of FIG. 1, use will be made of reference numerals of features shown in other FIGs (not least FIGs. 4 to 9) for the purposes of explanation.

It will be understood that each block illustrated in FIG. 1, as well as the further functionality described below, can be implemented by various means, such as hardware, firmware, and/or software including one or more computer program instructions. For example, one or more of the functions described above can be performed by a duly configured apparatus (such as an apparatus 10, as described with reference to FIG. 2, comprising means configured to perform the below described functionality). One or more of the functions/functionality can be embodied by a duly configured computer program (such as a computer program 14, as described with reference to FIG. 3, comprising computer program instructions which embody the functions/functionality described below and which can be stored by a memory storage device and performed by a processor).

The blocks illustrated in FIG. 1 can represent actions in a method, functionality performed by the apparatus 10, and/or sections of instructions/code in the computer program 14.

The apparatus may be at least one or more of:
a PND/mobile navigation apparatus;
an in-vehicle navigation system (e.g. in-dash), driving automation system or safety system; and
a server.

The instructions/code in the computer program can be loaded onto a computer or other programmable apparatus (i.e. hardware) to produce a machine, such that the instructions when performed on the programmable apparatus create means configured to implement the functions/functionality specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions configured to implement the functions/functionality specified in the blocks.

The method 100 provides a computer-implemented method of managing one or more portions of map data (e.g. map tiles of a digital map) stored on a data storage device (e.g. cache) of an apparatus (e.g. a PND), wherein the one or more portions of map data provide map data/information for respective one or more areas of a digital map (i.e. geographic coverage area of each map tile). In this regard, each portion of map data provides a representation of map features (not least for example such as segments/parts of a road) that is/are in the geographical area represented by the tile. In some examples, the division/distinction between 'a portion of map data of a digital map' and 'an area of the digital map is arbitrary and may be used herein merely for the purposes of explanation. For instance, in some examples, a portion of map data of a digital map and an area of the digital map may be regarded as (and addressed as) the same entity in the digital map. In this regard, in some examples, a portion of map data of a digital map and an area associated with the same may be defined as the same thing, i.e. synonymous.

In block 101, a determination is made as to whether a first portion of map data 400_1' (e.g. a first map tile) for a first area 300_1 of a digital map is consistent with a second portion of map data 400_2, stored in the data storage device (not least for example memory 13 or a data storage device, such as a cache, that is logically and/or physically separate from the memory 13 that also stores the computer program 14), for a second area 300_2 adjacent the first area.

In block 102, based at least in part on the determination of block 101, an update or a removal of the second portion of map data 400_2 is triggered.

To aid explication of the method 100 of FIG. 1 and its various features/terms (not least: first portion of map data 400_1', first area 300_1, second portion of map data 400_2 and second area 300_2 adjacent to the first area) an example scenario will now be discussed with respect to FIGs. 4 to 9.

FIG. 4 shows an example of a digital map 200 stored in a data storage device of an apparatus 10 (e.g. a cache of a PND). The digital map comprises a plurality of map portions 400 (e.g. map tiles) for a respective plurality of areas 300. It is to be appreciated that the digital map can be partitioned into map portions/areas/tiles of any suitable: size, shape and grid arrangement as is desired, necessary or appropriate in the particular circumstances/application. Tiles can be of any desired shape and/or size. For example, tiles can range from squares or rectangles representative of a couple of square kilometres to hundreds of square kilometres. The size of the tiles may be selected based on the density of objects in a geographic region covered by the tiles.

As is evident from FIG. 4, a road 201 passes through various of the areas 300. For each area through which the road passes, each map portion for each such area represents at least a segment of the road in that area.

In an example scenario, subsequent to the provision of the map portions 400 to the apparatus, the road changes. This could be due to, for example: a new road layout, a (temporary) diversion, road works, an accident, an obstacle blocking the old path of the road or any other reason. In this regard, the road's path/shape/position alters, e.g. such as is shown in FIG. 5 with reference to 201'.

FIG. 5 shows an updated digital map 200', that may be available for example at a source of map data (e.g. a map database or remote/cloud server). The updated digital map 200' comprises a plurality of updated map portions 400' for the plurality of areas 300 (i.e. map portions for the same areas as in FIG. 4 but new/updated/current map portions). The modified road 201' passes through various of the areas 300. For each area through which the modified road passes, each updated map portion for each such area represents at least a segment of the modified road in that area.

As clearly shown in FIGs. 4 and 5, the road's layout (e.g. its: design and arrangement such as its: path/trajectory, shape and position) has been modified. The modified road 201' (which is represented by various of the updated map portions of FIG. 5) does not precisely match that of the layout (e.g. path/shape/position) of the road 201 represented by various of the map portions of FIG. 4. Whilst the road is unchanged in certain areas (not least 303_3 and the lower rightmost 3 areas), the road's layout not least in areas 300_2 and 300_4 has altered.

To aid the explication of the method 100 of FIG. 1, we shall now consider a process of receiving, at an apparatus, an individual map data portion of a digital map. The process shall be discussed from the perspective of performing an update of a pre-existing map data portion (such a pre-existing map data portion being a map data portion that the apparatus already has a copy of in its data storage). In this regard, the apparatus may receive a new map data portion for an area of the digital map for which the apparatus already has an old map data portion, and the apparatus may replace the old map data portion with the new map data portion. However, it is to be appreciated that the method 100 of FIG. 1 need not necessarily only be applied to updating of a pre-existing map data portions, but could also be applied in situations where the apparatus requests missing map data portions, i.e. the apparatus may request one or more map data portions for one or more areas for which the apparatus does not have a copy of in its data storage.

Hereinafter, a "portion of map data" shall be simply referred to as a "tile", e.g. a map tile of a digital map, and the apparatus's data storage shall be simply referred to as a "cache".

In one example, the apparatus initially has a digital map 200 comprising an initial set of tiles 400, i.e. as per FIG. 4.

In order to perform an update of a tile (in this instance tile 400_1 for area 300_1), with an updated (new) tile for the area (in this instance tile 400_1' for the area 300_1), the apparatus may send, to a source of tiles (e.g. a map data base/map server that has current/up-to-date tiles), an update request. The request may be for:
an update of the tile for area 300_1 (i.e. the request identifies the area for which a tile update is requested),
a request for an update of tile 400_1 (i.e. the request identifies the (old) tile which is requested to be updated), and/or
a request for updated tile 400_1' (i.e. the request identifies the (new) updated tile which is requested).

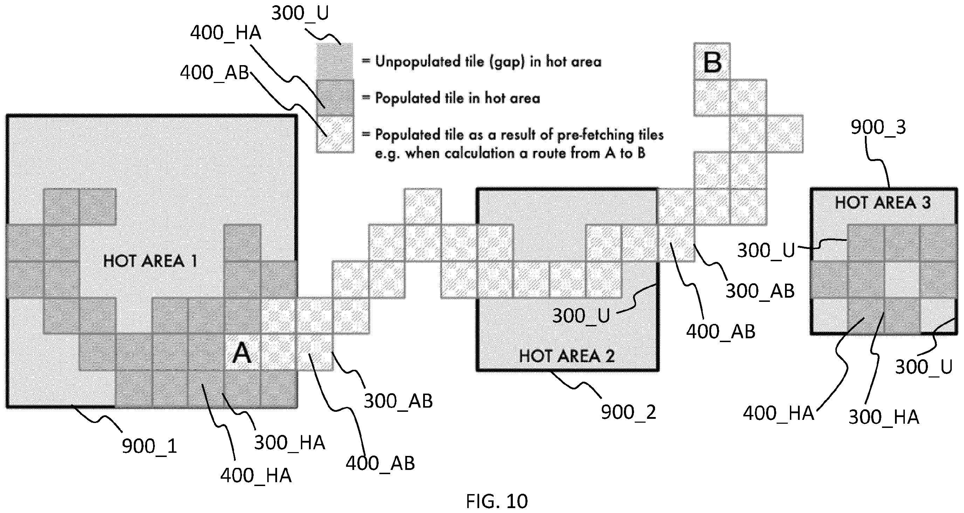

The request could be for the specific individual tile/area, or a set or group of tiles/areas that comprises tile 400_1 (e.g. tiles/areas associated with a route through the digital map, or a region of the digital map). The set or group of tiles/areas could be based on those that are with a particular region or zone of the digital map (e.g. a pre-determined zone of the digital map [which may be referred to as a "hot area" - such as is discussed further below and shown in FIG.10]) or tiles associated with a route along one or more road segments. Such tiles may comprise or consist tiles through which a route passes and may also additionally include tiles adjacent to or within a certain distance from the tiles through which the route passes.

The sending of the update request could be triggered based at least in part on a determination whether a tile in the cache is up-to-date. Any suitable means may be employed to determine whether a tile is current / up to date. For instance, the determination could be based, not least for example on: a version number of the tile (i.e. as compared to a version number of the latest/current version of the tile), a hash of the tile's content, a date of creation of the tile (e.g. if a time period since the date of creation or latest update exceeds a threshold), a validity period associated with the tile (e.g. if a validity period of the tile has expired). With regards to the latter, each tile may be associated with a parameter indicative of the validity period, or expiry date, after which the tile is not deemed to be current or up to date, i.e. such that the tile is not deemed to be 'fresh' after such a 'freshness' period. After the freshness period, the tile does not necessarily need to be updated. A check could be made with a map server to determine whether the tile is actually still up to date or not and hence whether it should be updated. Such a parameter may be referred to as a tile freshness parameter T which is indicative of a time duration. A determination by the apparatus that the tile is no longer fresh may trigger the apparatus to consult/check with the map server to determine whether the tile is outdated and whether the map server has a newer, more current, latest version or 'fresher' tile than the apparatus' tile. If so, the newer/more current/latest version/'fresher' tile may be pulled (requested by the apparatus) or pushed to the apparatus. Alternatively, or in addition, the sending of a request for an update of the tile may be triggered by a user, for example:
a user driving into an area for which tiles needs to be fetched;
a user requested route calculation leading to fetching of tiles for the route;
a user searching for a POI leading to fetching of tiles at/around the search result locations; and
a user wishing to pre-populate regions in a cache before going on a trip (e.g. to a location without a data connection).

As mentioned above, in other examples, instead of sending a request to update/replace pre-existing tile 400_1, the request could simply be a request for tile 400_1 (i.e. if tile 400_1 were currently missing/not present in the apparatus' cache). In which case the sending of the request could be triggered based on a determination that the cache does not contain a copy of tile 400_1. In yet other examples, the request could simply be a request for tile 400_1, wherein the request is triggered based at least in part on a determination that the tile is inconsistent with another, e.g. adjacent/neighbouring tile (the determination of tile consistency is discussed below).

Responsive to the request, the source sends the apparatus the updated tile 400_1'. In such a manner, a method of incrementally updating a tiled digital map may be provided, for example so as to enable the provision of an incrementally updateable tiled digital map not least such as an incrementally updateable tiled navigation map. In some examples, rather than the updated tile being sent to the apparatus responsive to the apparatus sending a request (i.e. such that the updated tile is "pulled" to the apparatus), instead the updated tile may be "pushed" to the apparatus.

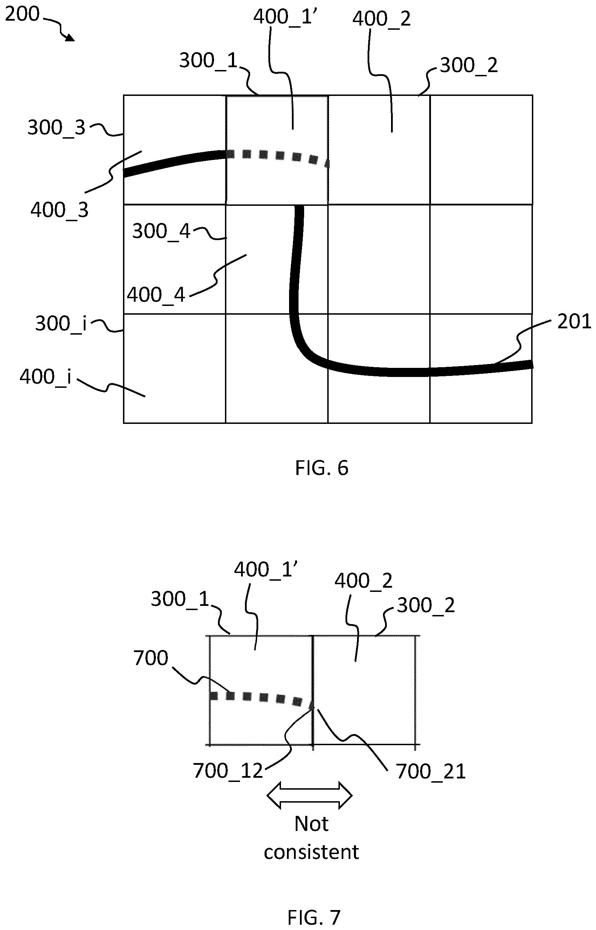

FIG. 6 schematically illustrates the apparatus' digital map wherein a single tile has been updated, namely the tile for area 300_1 has been replaced/updated with tile 400_1'. The remaining tiles 400 are unchanged.

Following receipt of updated tile 400_1', which may be received via a wireless communication network, the apparatus may then perform the method 100 of FIG. 1.

In this regard, in block 101, the apparatus determines whether the newly received updated tile 400_1' for area 300_1 is consistent with a tile for another area adjacent the area 300_1.

The determination as to whether two tiles are consistent may comprise or consist of one or more of determining whether:
a first part of a map feature, indicated in the updated tile 400_1' as extending from the area 300_1 into an adjacent area, is consistent with a second part of the map feature indicated in the tile for the adjacent area;
first information, from the updated tile 400_1' and which characterises a map feature at a boundary between the updated tile 400_1' and a tile for the adjacent area, is consistent with second information, from the tile for the adjacent area, that characterises the map feature at the boundary between the two areas;
first information, from the updated tile 400_1' and which is indicative of a number of and/or a position of one or more road portions that extend into an adjacent area, is consistent with second information, from a tile for the adjacent area, that is indicative of the number of and/or the position of the one or more road portions that extend into the adjacent area from the area 300_1;
a version of the tile 400_1 and a version of a tile of an adjacent area are the same or similar or compatible, indicating that they correspond to the same map version or to map versions that are compatible (e.g., consistency was previously verified); and
a validity period (freshness parameter) associated with the tile for the adjacent area, has expired.

A map feature (not least for example portions of a road), indicated in a first tile as extending from the tile into an adjacent tile may be deem to be consistent with a map feature, indicated in the adjacent tile as extending from the adjacent tile into the first tile if the map features are aligned or correctly connected to one another, for instance they have a continuity of characteristics at their boundary/tile interface. Such characteristics may include:
positional attributes (not least for example: position, orientation, shape and size);
application domains such as:
   routing attributes (not least for example: travel direction, and number of lanes), and
   search attributes (not least for example: road or street name); and
data domains not least such as road network, map visualisation, geographical (3D) terrain, (lane) geometry, traffic, weather, etc.

A mismatch in certain characteristics at the boundary/tile interface, e.g. speed limit, may be acceptable and need not, of itself, trigger a determination of inconsistent tiles.

Alternatively or in addition, a consistency check for a tile may be based at least in part on receiving consistency information indicative of reference consistency parameters/characteristics (e.g. positional/routing/search attributes) for the tile. The apparatus may determine values of the consistency parameters/characteristics for the tile and checks them against the reference consistency parameters/characteristics for the tile received in the consistency information for the tile. In this manner, the consistency information effectively provides a 'consistency fingerprint' for the tile. Such a consistency fingerprint may be used when determining whether old and new tiles are consistent, and/or whether adjacent tiles are consistent.

In some examples, the consistency information/consistency fingerprint (which may be a hash value) and can be associated not with a tile but with a boundary between tiles. Such a fingerprint/value may be calculated separately for the adjacent tiles and compared to check consistency.

FIG. 7, schematically illustrates a consistency check between the newly received updated tile 400_1' for area 300_1 and the tile 400_2 for the adjacent area 300_2 (which is to the right of area 300_1).

Two tiles may be deemed inconsistent if a tile contains data that should extend to its neighbour, but the neighbour does not contain the extended data, or the extended data is not properly connected or aligned with the data (not least for example a mismatch in the position and/or number of roads indicated as extending from one tile into a neighbouring tile). Two tiles are consistent if they are not inconsistent.

In the example of FIG. 7,the apparatus may determine that tile 400_1' contains data 700_12 representative of a road portion 700, which moreover indicates that the road portion should extend into neighbouring tile 400_2. However, the apparatus may determine that tile 400_2 does not contain the extended data (i.e. there is an absence of data 700_21 in tile 400_2 indicative of the road portion 700 extending into the area 300_2 represented by the tile 400_2. Hence, the apparatus may determine that tile 400_1' is not consistent with its adjacent tile 400_2.

Responsive to such a determination, i.e. a failed consistency check, the apparatus may be triggered to either replace tile 400_2 (e.g. send a request for the updated/new tile 400_2'), or remove tile 400_2 from the apparatus' cache.

Upon receipt of the updated tile 400_2', a similar consistency check may be performed with respect to updated tile 400_2', i.e. checking whether tiles adjacent to updated tile 400_2' are consistent with updated tile 400_2'. In such a manner, an incrementally updateable tiled navigation map or part of map (e.g., stored in the apparatus' cache) may effectively be provided.

If instead of updating tile 400_2 it is removed, the apparatus may delete tile 400_2 from its cache. The apparatus can then subsequently request the missing tile for area 300_2 as and when the apparatus requires a tile for area 300_2.

The determination as to whether the apparatus should update or remove a tile may be based on a determination as to whether the tile is located within a predetermined zone and optionally the type of predetermined zone. For instance, if a tile were located within a predetermined zone (such a zone may be referred to as a "hot area" and may be for example a zone around a vicinity of user's home, workplace, favourite location or frequently visited locations; or a zone at, around or in a vicinity of a route - such as is discussed further below and shown in FIG. 10), the tile may be updated. Whereas, if the tile were located outside of the predetermined zone, the tile may be removed from the apparatus' cache.

A consistency determination similar to the above may be performed for each tile that is both:
corresponding to an area adjacent to the area 300_1 of the updated tile 400_1', and
stored in the apparatus' cache.

Each such tile may then be updated or removed based on the determination.

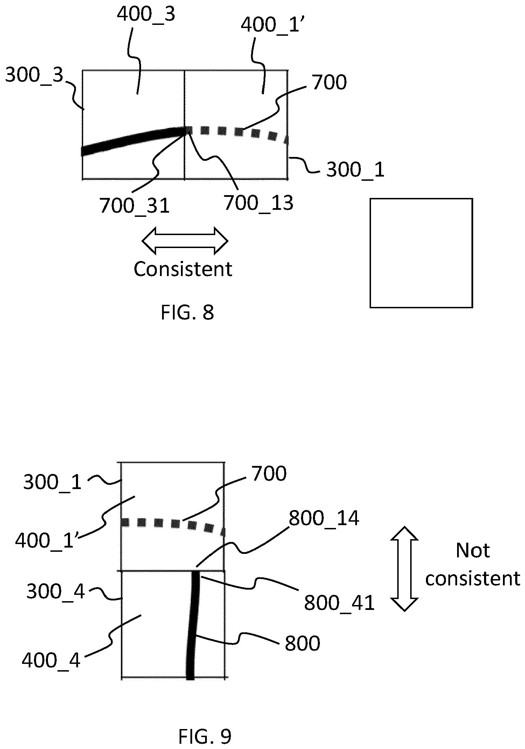

FIG. 8, schematically illustrates a consistency check between the updated tile 400_1' for area 300_1 and the tile 400_3 for the adjacent area 300_3 (which is to the left of area 300_1). Here, tile 400_1' contains data 700_13 indicative of a road portion 700 that should extend into neighbouring tile 400_3. Tile 400_3 contains extended data 700_31 indicative of the road portion 700 extending into the area 300_3 represented by the tile 400_3. Hence, tile 400_1' is deemed to be consistent with its adjacent tile 400_3, hence no update or removal of tile 400_3 is required.

FIG. 9, schematically illustrates a consistency check between the updated tile 400_1' for area 300_1 and the tile 400_4 for the adjacent area 300_4 (which is below area 300_1). Here, tile 400_4 contains data 800_41 indicative of a road portion 800 that should extend into neighbouring tile 400_1'. Tile 400_1' lacks extended data 800_14 indicative of the road portion 800 extending from the area 300_4 represented by the tile 400_4 into the area 300_1 represented by the tile 400_1'. Hence, tile 400_1' is deemed to be inconsistent with its adjacent tile 400_4, which triggers the update or removal of tile 400_4.

There now follows a discussion of various aspects of an overall cache strategy that may be implemented in examples of the present disclosure - i.e. that can be included in example methods, in accordance with examples of the present disclosure, of managing one or more portions of map data for respective one or more areas of a digital map stored in a data storage device.

In this discussion, the data storage device is a cache that comprises sub-caches. The cache comprises multiple caches (i.e. the sub-caches), namely
1. a navigation data cache, with NDS.Live tiles, and
2. a map visualization data cache, with Mapbox^{®} tiles.

The following discussion describes various common characteristics that these caches can share. The common characteristics may provide a consistent user experience when combining multiple caches. The common characteristics and control of the same may be effected or assisted by providing a cache orchestrator, or a common interface on top of specific cache interfaces. Individually, the caches can include domain specific characteristics as well.

To assist in the explication of the below discussed various aspects, FIG. 10 is provided which schematically illustrates a digital map. FIG. 10 shows 3 predetermined zones 900 of the map: "Hot Area 1" 900_1, Hot Area 2" 900_2and "Hot area 3" 900_3. FIG. 10 also shows areas 300_AB through or next to which a determined route, from A (in Hot Area 1) to B (via Hot Area 2), passes.

As indicated in FIG. 10, the cache, which stores tiles for the digital map, does not contain tiles ("populated tiles" 400) for the entirety of the map. In this regard, there are areas 300_U for which the cache does not contain a tile (e.g., the cache does not contain a map data portion 400 for a particular area 300). It is to be noted that each area 300 refers to an individual grid box of the map [as compared to a Hot Area 900].

It is also to be noted that the reference in FIG. 10 to:
- an "unpopulated tile" (indicated as area 300_U) - can be equated to an area 300_i which the cache does not contain a corresponding tile 400_i for, i.e. a map data portion 400_i for an area 300_i is not stored in the cache; and
- a "populated tile" (indicated as either 400_HA for tiles in a hot area, and 400_AB for tiles along the route from A to B [it is to be appreciated that a populated tile could be both along the route and also within a hot area]) - can be equated to an area which the cache does contain the tile for, i.e. the map data portion for the area is stored in the cache (in effect, a "populated tile" can be equated to a "tile" as referred to in the discussion of FIGs. 1 to 9).

One common characteristic is cache consistency.

With regards to cache consistency, two adjacent tiles are considered to be consistent with each other if their navigation features are well-connected. This includes the road network, topology and other features requires for routing. Tiles that were generated from different map versions may be inconsistent with each other.

The entire cache is consistent if all the neighbouring tiles that are stored in the cache are consistent with one another.

Consistency does not imply anything about the cache coverage or completeness. As indicated in FIG. 10, the cache coverage is incomplete, yet as long as all the tiles of the cache are consistent with their neighbours, the entire cache can be considered consistent even if it does not have full coverage of the geographic area of the map and is incomplete/has missing tiles.

A cache can be kept consistent by either updating broken/inconsistent tiles, or removing them.

Determining whether a tile is consistent with its neighbour may be done on a client device, e.g. tiles locally stored in a cache of a PND.

Routing on a consistent navigation data cache is possible, but it may fail because tiles are missing. Routing on a consistent navigation data cache which is incomplete (e.g., no full coverage of all tiles) may succeed but may produce a sub-optimal route (because the tiles required for an optimal route were missing, but the tiles required for a sub-optimal route were there/stored in the cache).

Another common characteristic is Hot Areas.

With regards to hot areas, these may represent areas for which tiles are not pro-actively deleted from the cache, but kept consistent instead. The tiles for spaces between hot areas may also be kept consistent as well, but such tiles outside of the hot areas may be removed if they break consistency.

Multiple hot areas may be defined in a cache. The rationale for multiple hot areas (rather than, for example, a single "home area") is that a user can set up a cache with many pre-populated areas that are disconnected. Once a route is calculated or the user drives into a hot area, the hot area will need to be populated and/or updated (i.e. receive missing or updated tiles for the hot area) and made consistent. However, a knock-on effect of having to download increasingly larger areas over time to regain consistency may be strongly reduced by the fact that most hot areas may not be connected by tiles (i.e. there wouldn't be a sequence of adjacent/neighbouring tiles linking one hot area to another), so the consistency requirement would not spread across such non-connected hot areas (e.g. such as Hot Area 3 in FIG. 10 which is not connected to Hot Areas 1 and 2).

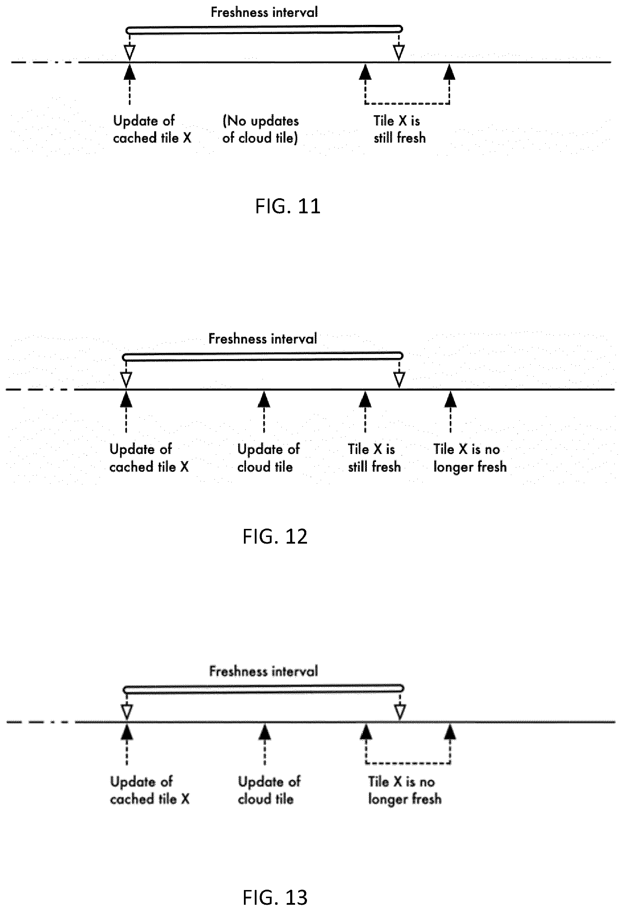

Tiles within hot areas may have a different update strategy/priority than tiles outside hot areas (this is discussed further below with respect to FIGs. 11 and 12).

Hot areas may be pre-populated with tiles (but do not have to be). For example, one could define and pre-populate larger cities in a country as hot areas. This would set up a device cache with an appropriately sized cache and cache/tile coverage whilst not affecting data consumption for keeping all the cities up-to-date (as the cities would not be connected by tiles stored in the cache - unless the user drove between all the cities and the tiles for such a route were downloaded to the cache which would thereby mean that the cache would have an unbroken chain of adjacent tiles from one city to another).

Hot areas may be defined to have any desired shape, not least for example rectangles.

Hot areas may overlap with one another - which would effectively create a larger (single) hot area.

Another common characteristic is pre-fetching.

With regards to pre-fetching, in order to make sure tiles are cached in advance, before a user enters those areas, an application can pre-fetch tiles. Pre-fetching improves the user experience by making sure the required data is stored local/onboard (e.g. in the user's PND such as an in-vehicle built in satellite navigation system or a driving automation system or a safety system). This would allow the use of the data even without or with a poor data connection.

Another common characteristic is an update polygon.

With regards to an update polygon, this is a defined geographical area for which an application requests the cache to be filled with the most recent map data/tails (and adjacent tiles would be kept consistent as pre the process discussed above).

An update polygon that runs through a hot area may cause additional tiles from the hot area to be downloaded to retain consistency (since the cache would have an unbroken chain of adjacent tiles to the hot area). An update polygon that runs through the space between hot areas may cause tiles (adjacent to the update polygon) to be removed (an update algorithm configured to control the update or removal of tiles when ensuring cache consistency is discussed further below).

Another common characteristic is tile freshness.

With regards to tile freshness, for tile updates, a tile freshness parameter T may be defined, which specifies a time duration referred to as a freshness interval. A typical T could be 1 week or a month by way of a non-limiting example.

Tiles in a device cache may always be considered fresh for the duration of T. After T, tiles may remain fresh until its corresponding cloud tile (i.e. the map data portion for the area associated with the tile which may be stored in a remote repository of map data) is updated.

In various of the above described examples, the method steps/functionality may be performed by a client device (not least such as one or more of: a mobile navigation apparatus, a PND, an in-vehicle navigation system, a driving automation system or a safety system). In some examples, the method steps/functionality may be performed by a remote server.

In this regard, a server may determine whether a first tile of a digital map is consistent with a second tile, stored in a data storage device of the client device, adjacent the first tile. The server may them based on the determination, cause/trigger an update of the second tile to be sent (e.g. from a remote store of updated tiles) to the client device.

FIGs. 11, 12 and 13 schematically illustrate examples of timelines for explaining use of the freshness interval.

In the timeline of FIG.11, following an update of a cached tile X, this starts the freshness interval T. The cloud tile is not updated during the freshness interval. Moreover, the cloud tile is not updated even after the expiry of the freshness interval. Accordingly, the updated cached tile is considered to remain fresh both during and after the freshness interval (since the cloud tile was never updated).

In the timeline of FIG.12, following an update of a cached tile X, this starts the freshness interval T. The cloud tile is updated during the freshness interval, i.e. before T ends (in the example shown, the cloud tile is updated at around T/2). However, the updated cached tile X is still considered to remain fresh until T. The updated cached tile is only considered no longer fresh after T in this case.

In the timeline of FIG.13, somewhat similar to FIG. 12, following an update of a cached tile X, this starts the freshness interval T. The cloud tile is updated during the freshness interval, i.e. before T ends. However, unlike in FIG. 12, in the scenario of FIG. 13 despite the updated cached tile's freshness interval T not yet having expired, the updated cached tile may nevertheless be considered to be no longer fresh in certain situations/upon certain events occurring - for example wherein cached tile X is found to be inconsistent with its neighbor cached tile Y which got updated on the apparatus during the interval T. Therefore cached tile X now needs to be updated as well - so it can no longer be considered fresh. In such instances, the updated cached tile may be marked or regarded as not being fresh before its freshness interval T expires. In such a manner, the freshness interval can effectively be overruled, so that the updated cached tile can be updated with the updated cloud tile, e.g. responsive to/as a consequence of an event occurring.

Another common characteristic is cache update requests.

With regards to cache update requests, a cache may get updated for 2 reasons:
1. An application requests data (e.g. portions of map data/tiles) to be retrieved for a geographical area (e.g. such as an update polygon as discussed above). Such a request is called an "application update request". Examples of application update requests may include: a driver entering an area which needs to be fetched; a route being calculated and a navigation engine wishing to pre-fetch the route; a user searching for a POI and the application pre-fetches the found location; a user wishing to pre-populate regions in the cache before going on a trip without a data connection.
2. A cache manager decides to download or remove tiles to retain cache consistency. These are called "consistency update requests". Examples of consistency update requests include: a tile being updated as the result of an application update request which results in connectivity with one of the updated tile's neighbours being broken (i.e. the updated tile is inconsistent with its neighbouring tile); a tile being updated because of another consistency update request which results in a connectivity break/lack of consistency with one of the neighbours of the updated tile.

These two types of cache update requests ("application update requests" and "consistency update requests") may handle fresh tiles differently:
- Fresh tiles may not be updated as a result of application update requests. They may only be updated if the freshness interval expired and a new version of the tile is available.
- Fresh tiles may be updated as a result of consistency update requests, also during the freshness interval. This may occur if a fresh tile is considered 'broken'/inconsistent by a neighbour and it needs to be updated in order to retain consistency.

Another common characteristic is the update algorithm that is used.

With regards to the update algorithm, for an application update of tile X, one may specify/define that:
1. If tile X is not present in the cache, it is downloaded.
2. If tile X is present in the cache and it is not fresh and there is a new version of the tile in the cloud, then it is updated; else it is left as-is in the cache.
3. When downloaded/updated, the neighbours of tile X in the cache (if any) are checked for consistency compliance and for those that that break consistency, consistency updates are issued (i.e. a consistency update request is performed).

This first part of the update algorithm ensures all tiles requested by applications are downloaded and fresh. It also ensures that the cache remains consistent.

The following second part of the update algorithm is for a consistency update of tile X, wherein one may specify/define that:
1. If tile X is inside a hot area, the request is treated as an application update request.
2. If tile X is outside a hot area and it is fresh and there is a new version of the tile in the cloud, then the tile is updated; otherwise the tile is removed from the cache.

This second part of the update algorithm keeps hot areas populated and consistent and gradually removes tiles outside hot areas from the cache that may otherwise cause inconsistencies. This also isolates unused hot areas from hot areas that are actually being used.

Another common characteristic is tile fetching and prioritization.

With regard to tile fetching and prioritization, a suitable mechanism/strategy may be used, not least for example such as: "tiles closest to the user/driver are prioritized".

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps configured to implement the functions specified in the block or blocks.

Accordingly, the blocks support: combinations of means configured to perform the specified functions; combinations of actions configured to perform the specified functions; and computer program instructions/algorithm configured to perform the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide a method and/or a corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

FIG. 2 schematically illustrates a block diagram of an apparatus 10 configured to perform the methods, processes, and functionality described in the present disclosure and illustrated with respect to FIGs. 1 and 4 to 12, in this regard the apparatus can be a client device, a server device. The apparatus can be a PND, in-vehicle navigation device or server. The component blocks of FIG. 2 are functional and the functions described can be performed by a single physical entity. The apparatus can be embodied by a computing device, not least such as those mentioned above. However, in some examples, the apparatus can be embodied as a chip, chip set, circuitry or module, i.e. for use in any of the foregoing.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores instructions such as a computer program 14 comprising such instructions (e.g. computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in FIGs. 1 and 4-12. The processor 12 by reading the memory 13 is able to load and execute the computer program 14.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components configured to effect the methods, processes and procedures described in the present disclosure and illustrated in FIGs. 1 and 4 -12. It is contemplated that the functions of these components can be combined in one or more components or performed by other components of equivalent functionality. The description of a function should additionally be considered to also disclose any means suitable for performing that function.

Where a structural feature has been described, it can be replaced by means configured to perform one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

In some examples, there is provided an apparatus for managing one or more portions of map data stored on a data storage device of the apparatus, wherein the one or more portions of map data provide map data for respective one or more areas of a digital map, wherein the apparatus comprises:
at least one processor 12; and
at least one memory 13 storing instructions that, when executed by the at least one processor 12, cause the apparatus at least to:
   determine whether a first portion of map data for a first area of the digital map is consistent with a second portion of map data, stored in the data storage device, for a second area adjacent the first area; and
   triggering, based at least in part on the determination, an update or a removal of the second portion of map data.

In some examples, there is provided a first apparatus for managing, by the first apparatus, one or more portions of map data stored on a data storage device of a second apparatus, wherein the one or more portions of map data provide map data for respective one or more areas of a digital map, the first apparatus comprising:
at least one processor 12; and
at least one memory 13 storing instructions that, when executed by the at least one processor 12, cause the apparatus at least to:
   determine, by the first apparatus, whether a first portion of map data for a first area of the digital map is consistent with a second portion of map data, stored in the data storage device of the second apparatus, for a second area adjacent the first area; and
   cause, by the first apparatus, sending, to the second apparatus and based at least in part on the determination, an update of the second portion of map data.

FIG. 3, illustrates a computer program 14 which may be conveyed via a delivery mechanism 20. The delivery mechanism 20 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program for managing one or more portions of map data stored on a data storage device of an apparatus, wherein the one or more portions of map data provide map data for respective one or more areas of a digital map; the computer program comprising instructions, which when executed by the apparatus, cause the apparatus to perform at least the following or configured to cause performing at least the following:
determining whether a first portion of map data for a first area of the digital map is consistent with a second portion of map data, stored in the data storage device, for a second area adjacent the first area; and
triggering, based at least in part on the determination, an update or a removal of the second portion of map data.

In certain examples of the present disclosure, there is provided a computer program for managing, by a first apparatus, one or more portions of map data stored on a data storage device of a second apparatus, wherein the one or more portions of map data provide map data for respective one or more areas of a digital map, wherein the computer program comprises instructions, which when executed by the first apparatus, cause the first apparatus to perform at least the following or configured to cause performing at least the following:
determining, by the first apparatus, whether a first portion of map data for a first area of the digital map is consistent with a second portion of map data, stored in the data storage device of the second apparatus, for a second area adjacent the first area; and
causing, by the first apparatus, sending, to the second apparatus and based at least in part on the determination, an update of the second portion of map data.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: evaluating, calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of receiving information should also be considered to disclose enabling, and/or causing, and/or controlling reception of information. Similarly, for example, a description of an apparatus receiving information should also be considered to disclose at least one means or controller of the apparatus enabling, and/or causing, and/or controlling the apparatus to receiving the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (for example tile freshness parameter), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method of managing one or more portions of map data stored on a data storage device of an apparatus, wherein the one or more portions of map data provide map data for respective one or more areas of a digital map, the method comprising:
determining whether a first portion of map data for a first area of the digital map is consistent with a second portion of map data, stored in the data storage device, for a second area adjacent the first area; and
triggering, based at least in part on the determination, an update or a removal of the second portion of map data.

2. The method of any previous claim, further comprising:
determining whether the first portion of map data is consistent with each portion of map data, stored in the data storage device, that represents an area adjacent the first area; and
triggering an update or a removal of each portion of map data determined to be inconsistent with the first portion of map data.

3. The method of any previous claim, wherein determining whether the first portion of map data is consistent with the second portion of map data comprises at least one of:
determining whether a first part of a map feature, indicated in the first portion of map data as extending from the first area into the second area, is consistent with a second part of the map feature indicated in the second portion of map data;
determining whether first information, from the first portion of map data and which characterises a map feature at a boundary between the first and second areas, is consistent with second information, from the second portion of the map data, that characterises the map feature at the boundary between the first and second areas;
determining whether first information, from the first portion of map data and which is indicative of a number of and/or a position of one or more navigable elements that extend into the second area, is consistent with second information, from the second portion of the map data, that is indicative of the number of and/or the position of the one or more navigable elements that extend into the second area from the first area;
determining whether a version of the first portion of map data and a version of the second portion of the map data are the same or similar or compatible; and
determining whether a duration of validity, associated with the second portion of map data, has expired.

4. The method of any previous claim, wherein the first portion of map data comprises an indication that a map feature extends from the first area into the second area, and wherein determining whether the first portion of map data is consistent with the second portion of map data comprises at least one of:
determining whether the second portion of map data comprises an indication of the map feature extending from the first area into the second area;
determining whether a first part of the map feature, in the first area, indicated in the first portion of map data is aligned with a second part of the map feature in the second area indicated in the second portion of map data; and
determining whether a first part of the map feature, in the first area, indicated in the first portion of map data is correctly connected to a second part of the map feature, in the second area, indicated in the second portion of map data.

5. The method of any previous claim, further comprising determining whether to update or remove the second portion of map data based at least in part on determining whether the second area is located within a predetermined zone; and optionally
wherein the second portion of map data is updated based at least in part on determining that the second area is located within the predetermined zone; and optionally
wherein the second portion of map data is removed based at least in part on determining that the second area is located outside of the predetermined zone.

6. The method of any previous claim, further comprising:
receiving the first portion of map data.

7. The method of claim 6, further comprising:
sending a request to a source of portions of map data, wherein the first portion of map data is received from the source of portions of map data responsive at least in part to the request; and optionally
wherein the request is at least one or more of:
a request for a portion of map data for the first area;
a request for one or more portions of map data for a region of the digital map that comprises at least the first area;
a request for one or more portions of map data associated with a route along one or more segments of navigable elements of a network of navigable elements represented by the digital map;
a request to receive a portion of map data for the first area and that is not stored on the data storage device;
a request to update a portion of map data, stored on the data storage device, for the first area;
a request to replace a portion of map data, stored on the data storage device, for the first area and
a user triggered request.

8. The method of claim 7, wherein the request is sent based at least in part on one or more of:
determining whether the data storage device comprises a portion of map data for the first area;
determining whether a portion of map data, for the first area and which is stored on the data storage device, is current or up to date;
determining whether a duration of validity, associated with a portion of map data for the first area which is stored on the data storage device, has expired;
determining whether a source of portions of map data comprises a portion of map data for the first area that is newer than a portion of map data, stored on the data storage device, for the first area;
determining whether a portion of map data, for the first area and which is stored on the data storage device, is consistent with a portion of map data, stored on the data storage device, that represents an area adjacent the first area; and
a user request.

9. The method of any previous claim, wherein:
triggering an update of the second portion of map data comprises sending a request, to a source of portions of map data, for an update of the second portion of map data; and/or
triggering a removal of the second portion of map data comprises deleting the second portion of map data stored on the data storage device.

10. The method of any previous claim, wherein at least some of the portions of map data comprise at least one or more of the following:
map tiles of a digital map;
one or more data layers;
information for use in route calculation;
information for use in route guidance;
information for use in lane level navigation;
information for use by in-vehicle robots, driving automation or safety systems;
information for use in visualising at least a part of the digital map on a display device;
navigation information;
information representative of one or more segments of navigable elements of a network of navigable elements; and
Navigation Data Standard, NDS, tiles.

11. The method of any previous claim, wherein the data storage device comprises at least one or more of:
a map cache;
a navigation data cache; and
a map visualization data cache.

12. A computer-implemented method of managing, by a first apparatus, one or more portions of map data stored on a data storage device of a second apparatus, wherein the one or more portions of map data provide map data for respective one or more areas of a digital map, the method comprising:
determining, by the first apparatus, whether a first portion of map data for a first area of the digital map is consistent with a second portion of map data, stored in the data storage device of the second apparatus, for a second area adjacent the first area; and
causing, by the first apparatus, sending, to the second apparatus and based at least in part on the determination, an update of the second portion of map data.

13. The method of claim 12, wherein:
the first apparatus is a server; and
the second apparatus is at least one or more of:
a client device;
a mobile navigation apparatus;
a PND;
an in-vehicle navigation system;
a driving automation system or
a safety system.

14. An apparatus comprising means configured to perform the method of any previous claim.

15. A computer program comprising instructions, which when executed by an apparatus, cause the apparatus to perform the method as claimed in any of claims 1 to 13.
